# EUROPÄISCHE PATENTSCHRIFT

(11) **EP 0 958 160 B1**
(45) Veröffentlichungstag und Bekanntmachung des Hinweises auf die Patenterteilung: **03.04.2002**
(21) Anmeldenummer: 97912045.8
(22) Anmeldetag: 08.10.1997
(51) Int. Cl.: B60R 21/26

(54) **RÜCKHALTESYSTEM**
INTELLIGENT RESTRAINING SYSTEM
SYSTEME DE RETENUE INTELLIGENT

(30) Priorität: 13.02.1997 DE 19705431
(43) Veröffentlichungstag der Anmeldung: 24.11.1999
(73) Patentinhaber: ROBERT BOSCH GMBH, 70442 Stuttgart (DE)
(72) Erfinder: MASCHEK, Marko, D-71665 Vaihingen (DE); MATTES, Bernhard, D-74343 Sachsenheim (DE)
(86) Internationale Anmeldenummer: DE9702300
(87) Internationale Veröffentlichungsnummer: WO9835859

(56) Entgegenhaltungen:
- EP-A- 0 705 740
- WO-A-94/23973
- DE-A- 4 214 222
- DE-C- 19 632 836
- GB-A- 2 293 681
- US-A- 5 161 776
- Airbag 2000: 3rd Intl. Symposium on Sophisticated Car Occupant Safety Systems, 1996, November 26/27, Karlsruhe, Germany. Fraunhofer-Institut für Chemische Technologie, ICT. Pages 16-1 - 16-19

## Beschreibung

### Stand der Technik

Die vorliegende Erfindung betrifft lt. Oberbegriff des Anspruchs 1 ein Rückhaltesystem, das mehrere Rückhalteeinrichtungen für Fahrzeuginsassen aufweist und mit einem zentralen Steuergerät ausgestattet ist, das über ein Bussystem die Auslösung der Rückhalteeinrichtungen steuert.

Ein derartiges Rückhaltesystem ist dem Tagungsband des dritten International Symposium on Sophisticated Car Occupant Safety Systems "Airbag 2000", Karlsruhe, 26./27.11.1996, S. 16-1 bis 16-19 beschrieben. Wie diesem Beitrag zu entnehmen ist, hat es bereits häufiger Fälle gegeben, bei denen Fahrzeuginsassen durch einen aufgeblasenen Airbag sogar tödlich verletzt worden sind. Das lag in der Regel daran, daß die bisher eingesetzten Rückhaltesysteme in ihrem Auslöseverhalten sehr starr sind und nicht flexibel auf unterschiedliche Arten der Sitzbelegung, auf verschiedene Sitzpositionen, Körpergrößen oder -gewichte der Insassen reagieren können. Von der Fachwelt wird daher vorgeschlagen, sogenannte intelligente Rückhaltesysteme einzuführen, die es ermöglichen, die Rückhalteeinrichtungen (z.B. Airbags) nicht in jedem Fall mit voller Kraft, sondern in Abhängigkeit von der Unfallschwere und der Sitzbelegung mit reduzierter Kraft oder in mehreren Stufen hintereinander auszulösen. Auch soll ein solches intelligentes Rückhaltesystem erkennen können, ob eine gewisse Unfallart oder -schwere oder eine besondere Sitzbelegung (Kindersitz) vorliegt, bei der auf ein Auslösen ganz verzichtet werden sollte. Ebenso sollte ein intelligentes Rückhaltesystem in der Lage sein, bei Mehrfachkollisionen mit Mehrfachauslösungen der einzelnen Rückhalteeinrichtungen zu reagieren.

In der eingangs zitierten Literaturstelle wird vorgeschlagen, bei der Vielzahl zukünftig in Fahrzeugen eingebauten Rückhalteeinrichtungen (Airbags im Kopf-, Thorax- und Kniebereich für jeden Fahrzeugsitz und Gurtstraffer) alle Rückhalteeinrichtungen über einen sogenannten "Zündbus" von einem zentralen Steuergerät aus anzusteuern. Dabei ist jede Rückhalteeinrichtung mit einem Gasgenerator versehen, der seine Zündinformation über den Zündbus von dem zentralen Steuergerät erhält.

Die Aufgabe der Erfindung besteht nun darin, ein Rückhaltesystem der eingangs genannten Art anzugeben, das mit einem möglichst geringen Aufwand eine sehr flexible Ansteuerung jeder einzelnen Rückhalteeinrichtung ermöglicht, so daß in Abhängigkeit von der Unfallart, der Unfallschwere und der Sitzbelegung (z.B. Insassenposition, Insassengewicht) für die Insassen ein optimaler Schutz gewährleistet ist.

### Vorteile der Erfindung

Die gennante Aufgabe wird mit den Merkmalen des Anspruchs 1 dadurch gelöst, daß ein zentraler Gasgenerator vorhanden ist, dessen Zündung von einem zentralen Steuergerät ausgelöst wird. Der Gasgenerator ist über ein Gasleitungssystem mit den Rückhalteeinrichtungen verbunden. In den Gaszuleitungen zu einzelnen Rückhalteeinrichtungen sind elektrisch steuerbare Ventile angeordnet, deren Steuerung vom zentralen Steuergerät aus über ein Bussystem erfolgt. So kann für jede Rückhalteeinrichtung eine individuelle Aufblascharakteristik (zeitlicher Verlauf des Gasdrucks) realisiert werden, und dazu ist nur ein einziger zentraler Gasgenerator und ein einziges Steuergerät erforderlich, das die Aufblascharakteristik einer jeden Rückhalteeinrichtung unter Berücksichtigung der Unfallart, der Unfallschwere und der Sitzbelegung ermittelt.

Gemäß den Unteransprüchen ist das zentrale Steuergerät mit mehreren Beschleunigungssensoren, Precrashsensoren, Überrollsensoren und/oder Sitzbelegungssensoren verbunden, um das kinetische Verhalten des Fahrzeugs und/oder die Unfallschwere und/oder die Sitzbelegung im Fahrzeug zu ermitteln und daraus die Aufblascharakteristiken für die Rückhalteeinrichtungen abzuleiten.

Die Ventile können z.B. Magnetventile sein, wie sie für die Kraftstoffeinspritzung bei Brennkraftmaschinen verwendet werden.

Das zentrale Steuergerät überwacht den Gasdruck im Gasgenerator und steuert auch ein Überdruckventil am Gasgenerator.

Das Gasleitungssystem kann die Struktur eines sternförmigen Busses haben, dessen Zweige jeweils Gruppen von Rückhalteeinrichtungen, die nach Zonen im Fahrzeug eingeteilt sind, mit Gas versorgen.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Blockschaltbild eines erfindungsgemäßen Rückhaltesystems und
Figur 2 mehrere Aufblascharakteristika.

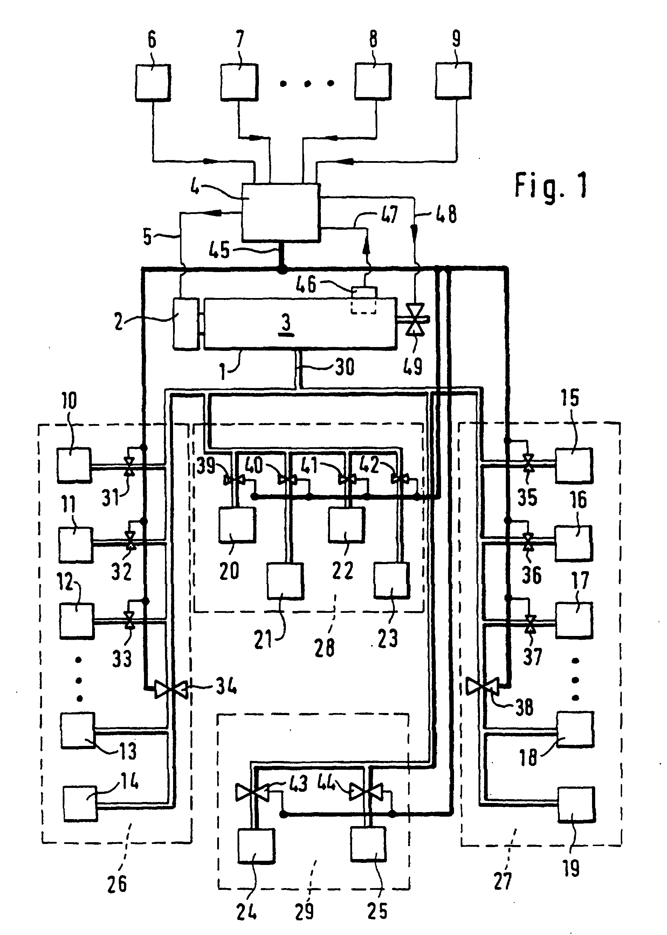

Das in der Figur 1 dargestellte intelligente Rückhaltesystem weist einen zentralen Gasgenerator 1 mit einem pyrotechnischen Element 2 und einem Gasbehälter 3 auf. Das pyrotechnische Element 2 erhält von einem zentralen Steuergerät 4 über eine Leitung 5 eine Zündinformation, wenn es zu einem Crash des Fahrzeuges kommt. Die Entscheidung, wann der Gasgenerator zu zünden ist, trifft das zentrale Steuergerät 4 anhand der Ausgangssignale mehrerer Sensoren 6, 7, 8, 9. Diese Sensoren 6 bis 9 können Beschleunigungssensoren, Precrashsensoren, Überrollsensoren, Sitzbelegungssensoren (einschließlich Sensoren, die den Innenraum des Fahrzeugs überwachen) oder andere das kinetische Verhalten des Fahrzeugs und/oder die Unfallschwere ermittelnde Sensoren sein. Aus all den Sensorsignalen leitet das zentrale Steuergerät 4 Entscheidungen darüber ab, ob die Unfallschwere ein Auslösen des Sicherheitssystems erforderlich macht. Nur dann wird ein Zündsignal an das pyrotechnische Element 2 des Gasgenerators 1 abgegeben. Außerdem entscheidet das zentrale Steuergerät 4 aufgrund der vorliegenden Sensorsignale, welche der im Fahrzeug vorhandenen Rückhalteeinrichtungen zu aktivieren sind und welche Aufblascharakteristik (zeitliche Gasdruckverteilung) für jede einzelne Rückhalteeinrichtung in Frage kommt.

In der Figur 1 ist eine Vielzahl von Rückhalteeinrichtungen 10 bis 25 eingezeichnet, so wie es bei zukünftigen Sicherheitssystemen in Kraftfahrzeugen sein wird. Dabei sind die Rückhalteeinrichtungen in Gruppen 26, 27, 28 und 29 eingeteilt. In der Gruppe 26 sind Rückhalteeinrichtungen 10 bis 14 zusammengefaßt, die an der linken Fahrzeugseite aktiviert werden können. Dazu gehören Airbags im Kopf- und Thoraxbereich und Gurtstraffer. Dasgleiche gilt für die in der Gruppe 27 auf der rechten Fahrzeugseite zusammengefaßten Rückhalteeinrichtungen 15 bis 19. Die zu der Gruppe 28 gehörenden Rückhalteeinrichtungen 20 bis 23 sind ein Fahrer-, ein Beifahrerairbag und Kniebags für beide Seiten. Schließlich enthält die Gruppe 29 Airbags 24 und 25 im Fondbereich des Fahrzeugs. Die soeben erwähnten Rückhalteeinrichtungen sollen nur beispielhaft sein. Für das beschriebene Rückhaltesystem können weniger aber auch mehr Rückhalteeinrichtungen in Frage kommen.

Jede der genannten Rückhalteeinrichtungen 10 bis 25 wird über ein Gasleitungssystem 30 (in der Zeichnung doppellinig dargestellt) aus dem Gasbehälter 3 gespeist. Das Gasleitungssystem ist in dem dargestellten Ausführungsbeispiel als sternförmiger Bus ausgeführt, von dem zu jeder Gruppe 26, 27, 28, 29 der Rückhalteeinrichtungen ein eigener Zweig führt. Das Gasleitungssystem kann aber auch ein baumartiger oder ringartiger Bus sein.

Die Gaszufuhr zu den einzelnen Rückhalteeinrichtungen wird mittels elektrisch steuerbarer Ventile 31 bis 44, welche in den Gaszuleitungen zu den Rückhalteeinrichtungen eingesetzt sind, gesteuert. Damit für jede Rückhalteeinrichtung 10 bis 25 der Gasdruck individuell gesteuert werden kann, ist jeder Rückhalteeinrichtung ein Ventil in seiner Gaszuleitung zugeordnet. Es können aber auch mehrere Rückhalteeinrichtungen gleichermaßen über ein Ventil gesteuert werden. Die Figur 1 zeigt, daß z.B. der Gasdruck in den Rückhalteeinrichtungen 13 und 14 gemeinsam durch das Ventil 34 und der Gasdruck in den Rückhalteeinrichtungen 18 und 19 gleichermaßen durch das Ventil 38 gesteuert wird. Die gleichzeitige Ansteuerung mehrerer Rückhalteeinrichtungen über ein Ventil ist dann sinnvoll, wenn erfahrungsgemäß durch das gleichzeitige Aufblasen mehrerer Rückhalteeinrichtungen mit gleichem Druck den Insassen ein optimaler Schutz geboten wird. Schließlich führt das auch zu einem Einsparen an Ventilen.

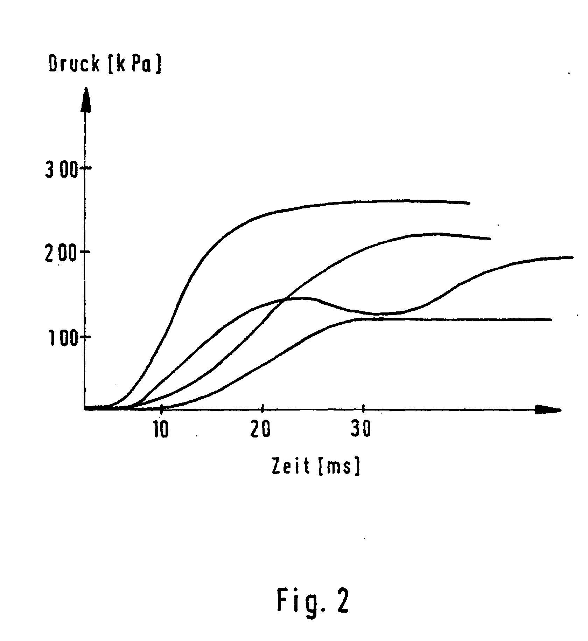

Aus vielen Crasherfahrungen kann man in Abhängigkeit von der sensierten Unfallschwere, von der Unfallart und von der Sitzbelegung im Fahrzeug für jede Rückhalteeinrichtung 10 bis 25 einen für den Insassenschuzt optimalen zeitlichen Verlauf des Gasdrucks, d.h. eine Aufblascharakteristik, herleiten. In der Figur 2 sind mehrerer solcher Aufblascharakteristika beispielhaft dargestellt. Sie werden zweckmäßigerweise im zentralen Steuergerät 4 abgespeichert, und das Steuergerät 4 wird in Abhängigkeit von den Signalen der Sensoren 6, 7, 8, 9 den Druckaufbau in den einzelnen Rückhalteeinrichtungen 10 bis 25 über die Ventile 31 bis 44 mit der entsprechenden Aufblascharakteristik steuern.

Die Ansteuerung der Ventile 31 bis 44 erfolgt über ein Bussystem 45 (in Figur 1 fett eingezeichnete Linien). Das Bussystem ist in der Figur 1 ein baumartiger Bus, von dem zu jeder Gruppe 26, 27, 28 und 29 von Rückhalteeinrichtungen ein eigener Signalzweig führt. Dieser Bus kann auch stern- oder ringförmig sein. Die Ventile 31 bis 44 sind vorzugsweise elektrisch steuerbare Magnetventile. Solche Magnetventile werden auch für die Kraftstoffeinspritzung bei Brennkraftmaschinen verwendet. Diese Art von Ventilen zeichnet sich durch eine lineare Charakteristik des Ventilhubs über der Zeit aus und arbeitet aufgrund der geringen Nadelmasse sehr verzögerungsarm. Da bei der Benzineinspritzung etwa mit den gleichen Drücken gearbeitet wird wie bei den Rückhalteeinrichtungen, bietet es sich an, dieselben bekannten Magnetventile für die gesteuerte Gaszufuhr der Rückhalteeinrichtungen einzusetzen.

Am Gasbehälter 3 ist ein Drucksensor 46 vorgesehen, durch den das zentrale Steuergerät 4 über eine Leitung 47 eine Information über den momentanen Druck im Gasbehälter 3 erhält. Diese Information über den Druck im Gasbehälter 3 ist wichtig für das zentrale Steuergerät 4, weil bei einem Öffnen eines der Ventile 31 bis 44 der Druck im Gasbehälter 3 absinkt und sich die Druckveränderung auf alle Aufblascharakteristiken für alle Rückhalteeinrichtungen auswirkt. Das heißt, bei der Aussteuerung der Ventile 31 bis 44 muß der Druck im Gasbehälter 3 unbedingt berücksichtigt werden.

Damit, wie oben beschrieben, jedes einzelne Ventil 31 bis 44 von dem zentralen Steuergerät individuell angesteuert werden kann, muß das zentrale Steuergerät 4 eine Adressierung vornehmen und dazu jedes Ventil auch mit einer Adresserkennung ausgestattet sein. Die Adressierung und Adresserkennung wird hier nicht näher ausgeführt, da sie bei Bussystemen allgemein bekannt sind.

Das zentrale Steuergerät 4 besitzt außerdem eine Ausgangsleitung 48 zu einem Überdruckventil 49 am Gasbehälter 3. Nach einem Unfall kann das zentrale Steuergerät 4 das Überdruckventil 49 öffnen, um den Restdruck im Gasbehälter 3 abzubauen. Für die Rettungsmannschaft und die Unfallopfer besteht nämlich ein Verletzungsrisiko durch ungewollte Zündungen des noch vorhandenen Restgases. Läßt man aber das Restgas über das Überdruckventil 49 möglichst schnell entweichen, so kann diese Gefahr ausgeschaltet werden.

Bei vielen Unfällen kommt es zu Mehrfachkollisionen. Um das Verletzungsrisiko der Insassen möglichst gering zu halten, müßte also ein Rückhaltesystem in der Lage sein, die Rückhalteeinrichtungen mindestens zweimal hintereinander auszulösen. Deshalb ist der Gasgenerator 1 so ausgelegt, daß entweder die im Gasbehälter 3 vorhandene Gasmenge ausreicht, um die Rückhalteeinrichtungen 10 bis 25 zwei oder mehrmals hintereinander mit Gas zu füllen, oder mehrmals einer Zündung des Gasgenerators 1 durch das pyrotechnische Element 2 vorzunehmen.

Das zuvor beschriebene Rückhaltesystem könnte auch eingesetzt werden, um die Karosseriesteifigkeit auf den Crashpartner abzustimmen. Das heißt, die Steifigkeit der Karosserie wird zur Zeit des Aufpralls verstärkt oder vermindert. Wird z.B. ein Kleinwagen als schwächerer Crashpartner von einer Precrash-Sensorik erkannt, kann die Karosserie dadurch geschwächt werden, daß Versteifungselemente an definierten Stellen gebrochen werden. Die für solche Brüche erforderlichen Kräfte können durch entsprechend hohen Gasdruck aufgebracht werden. Umgekehrt läßt man die Stabilisierungselemente bestehen, wenn die Prechrash-Sensorik einen stärkeren Crashpartner erkennt. Ebenso kann ein Fußgängerschutz durch Außenairbags oder eine sich teilweise öffnende Motorhaube erreicht werden. Beim Aufprall eines Fußgängers wird die Motorhaube energieabsorbierend niedergedrückt.

## Patentansprüche

1. Rückhaltesystem, das mehrere Rückhalteeinrichtungen (10-25), für Fahrzeuginsassen aufweist und mit einem zentralen Steuergerät (4) ausgestattet ist, das über ein Bussystem (45) die Auslösung der Rückhalteeinrichtungen (10-25) steuert, **dadurch gekennzeichnet, daß** ein zentraler Gasgenerator (1) vorhanden ist, dessen Zündung vom zentralen Steuergerät (4) ausgelöst wird, daß der Gasgenerator (1) über ein Gasleitungssystem (30) mit den Rückhalteeinrichtungen (10-25) verbunden ist, daß in den Gaszuleitungen zu den Rückhalteeinrichtungen (10-25) elektrisch steuerbare Ventile (31-44) angeordnet sind und daß die Steuerung der Ventile (31-44) vom zentralen Steuergerät (4) aus über das Bussystem (45) erfolgt.

2. Rückhaltesystem nach Anspruch 1, **dadurch gekennzeichnet, daß** das zentrale Steuergerät (4) jedes Ventil (31-44) so steuert, daß an der (den) über das Ventil (31-44) mit Gas beaufschlagten Rückhalteeinrichtung(en) (10-25) ein solcher zeitlicher Verlauf des Gasdrucks entsteht, der aufgrund von sensierten Daten über das kinetische Verhalten des Fahrzeugs und/oder die Unfallschwere und/oder die Sitzbelegung und/oder die Insassenposition und/oder das Insassengewicht einen optimalen Schutz für die Insassen gewährleistet.

3. Rückhaltesystem nach Anspruch 1 oder 2, **dadurch gekennzeichnet, daß** das zentrale Steuergerät (4) mit ein oder mehreren Beschleunigungssensoren, Precrashsensoren und/oder Überrollsensoren und/oder Sitzbelegungssensoren (6-9) verbunden ist.

4. Rückhaltesystem nach Anspruch 1 oder 2, **dadurch gekennzeichnet, daß** die Ventile (31-44) Magnetventile sind, wie sie für die Kraftstoffeinspritzung bei Brennkraftmaschinen verwendet werden.

5. Rückhaltesystem nach Anspruch 1, **dadurch gekennzeichnet, daß** das zentrale Steuergerät (4) den Gasdruck in dem Gasgenerator (1) überwacht und den Gasdruck bei der Ansteuerung der Ventile (31-44) berücksichtigt.

6. Rückhaltesystem nach Anspruch 1, **dadurch gekennzeichnet, daß** das zentrale Steuergerät (4) ein Überdruckventil (49) am Gasgenerator (1) steuert.

7. Rückhaltesystem nach Anspruch 1, **dadurch gekennzeichnet, daß** das Gasleitungssystem (30) die Struktur eines sternförmigen Busses hat, dessen Zweige jeweils Gruppen (26, 27, 28, 29) von Rückhalteeinrichtungen (10-25), die nach Zonen im Fahrzeug eingeteilt sind, mit Gas versorgen.

## Claims

1. Restraint system which has a plurality of restraint devices (10-25) for vehicle occupants and is provided with a central control unit (4) which controls the triggering of the restraint devices (10-25) via a bus system (45), **characterized in that** there is a central gas generator (1), the ignition of which is triggered by the central control unit (4), **in that** the gas generator (1) is connected to the restraint devices (10-25) via a gas line system (30), **in that** electrically controllable valves (31-44) are arranged in the gas supply lines to the restraint devices (10-25), and **in that** the valves (31-44) are controlled by the central control unit (4) via the bus system (45).

2. Restraint system according to Claim 1, **characterized in that** the central control unit (4) controls each valve (31-44) in such a manner that at the restraint device(s) (10-25) supplied with gas via the valve (31-44) the result is a time profile for the gas pressure ensuring optimum protection for the occupants based on data sensed from the kinematic behaviour of the vehicle and/or the severity of the accident and/or the seat occupation and/or the position of the occupants and/or the weight of the occupants.

3. Restraint system according to Claim 1 or 2, **characterized in that** the central control unit (4) is connected to one or more acceleration sensors, precrash sensors and/or rollover sensors and/or seat occupation sensors (6-9).

4. Restraint system according to Claim 1 or 2, **characterized in that** the valves (31-44) are solenoid valves as used for the injection of fuel in internal combustion engines.

5. Restraint system according to Claim 1, **characterized in that** the central control unit (4) monitors the gas pressure in the gas generator (1) and takes the gas pressure into consideration when activating the valves (31-44).

6. Restraint system according to Claim 1, **characterized in that** the central control unit (4) controls a pressure control valve (49) on the gas generator (1).

7. Restraint system according to Claim 1, **characterized in that** the gas line system (30) has the structure of a star-shaped bus whose branches each supply gas to groups (26, 27, 28, 29) of restraint devices (10-25) which are divided according to zones in the vehicle.

## Revendications

1. Système de retenue comportant plusieurs installations de retenue (10-25) des passagers d'un véhicule ainsi qu'un appareil de commande central (4), qui commande le déclenchement des installations de retenue (10-25) par un système de bus (45),
**caractérisé par**
un générateur central de gaz (1) dont l'allumage est déclenché par l'appareil de commande central (4),
le générateur de gaz (1) est relié aux installation de retenue (10-25) par un système de conduite de gaz (30),
les conduites d'alimentation en gaz des installations de retenue (10-25) comportent des soupapes à commande électrique (31-44) et
la commande des soupapes (31-44) par l'appareil de commande central (4) se fait par le système de bus (45).

2. Système de retenue selon la revendication 1,
**caractérisé en ce que**
l'appareil de commande central (4) commande chaque soupape (31-44) pour engendrer une évolution chronologique de la pression du gaz qui assure une protection optimale des passagers sur la base des données détectées, assure par le comportement cinétique du véhicule et/ou la gravité de l'accident et/ou l'occupation des sièges et/ou la position des passagers et/ou le poids des passagers.

3. Système de retenue selon l'une quelconque des revendications 1 ou 2,
**caractérisé en ce que**
l'appareil de commande central (4) est relié à un ou plusieurs capteurs d'accélération, capteurs de précollision et/ou capteurs de retournement et/ou capteurs d'occupation de siège (6-9).

4. Système de retenue selon l'une quelconque des revendications 1 ou 2,
**caractérisé en ce que**
les soupapes (31-44) sont des électrovannes comme celles utilisées pour l'injection de carburant dans un moteur à combustion interne.

5. Système de retenue selon la revendication 1,
**caractérisé en ce que**
l'appareil de commande central (4) surveille la pression de gaz dans le générateur de gaz et tient compte de la pression de gaz en commandant les soupapes (31-44).

6. Système de retenue selon la revendication 1,
**caractérisé en ce que**
l'appareil de commande central (4) commande une soupape de surpression (49) du générateur de gaz (1).

7. Système de retenue selon la revendication 1,
**caractérisé en ce que**
le système de conduite de gaz (30) a la structure d'un bus en étoile dont les branches alimentent en gaz des groupes (26, 27, 28, 29) d'installations de retenue (10-25) réparties en zones dans le véhicule.
